**Europäisches Patentamt**

**European Patent Office**

**Office européen des brevets**

(11) Veröffentlichungsnummer: **0 076 529**
**B1**

(12) **EUROPÄISCHE PATENTSCHRIFT**

(45) Veröffentlichungstag der Patentschrift:
03.09.86

(21) Anmeldenummer: 82201069.0

(22) Anmeldetag: 06.09.82

(51) Int. Cl.⁴: **F 02 C 3/30**, F 02 C 6/16 //
F02C7/143

(54) NOx - Reduktion bei Gasturbinen durch Wassereinspritzung in die Brennkammer.

(30) Priorität: 18.09.81 CH 6039/81

(43) Veröffentlichungstag der Anmeldung:
13.04.83 Patentblatt 83/15

(45) Bekanntmachung des Hinweises auf die Patenterteilung:
03.09.86 Patentblatt 86/36

(84) Benannte Vertragsstaaten:
CH DE LI NL SE

(56) Entgegenhaltungen:
EP-A-0 035 822
WO-A-81/02443
DE-A-2 837 714
DE-B-1 195 553
DE-B-1 239 888
FR-A-2 230 864
GB-A-1 212 511
US-A-3 788 066
US-A-3 877 218

(73) Patentinhaber: BBC Aktiengesellschaft Brown,
Boveri & Cie., Haselstrasse, CH- 5401 Baden (CH)

(72) Erfinder: Zaugg, Paul, Hirzemätteli 5, CH- 5400
Baden (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur NO$_x$-Reduktion und zur Leistungssteigerung eines Luftspeichergasturbinenkraftwerks nach dem Oberbegriff des Anspruchs.

Für die Erzeugung von Druckluft von hohem Druck, wie z.B. bei Luftspeichergasturbinenkraftwerken, sind gewöhnlich zwei oder mehrere Verdichter hintereinandergeschaltet, wobei zur Verminderung der Verdichterantriebsleistung und zur Verkleinerung des Luftvolumens die Luft zwischen je zwei Verdichtern durch Zwischenkühler und nach dem letzten Verdichter durch einen Nachkühler geleitet wird. Da die Luft aus der freien Umgebung angesaugt wird, enthält sie stets Wasserdampf. Bei konstant bleibender Lufttemperatur nimmt das in flüssiger Form ausgeschiedene Wasser mit steigendem Druck zu. Bei 50 bar Enddruck und 20°C beispielsweise enthält die Luft nur mehr 1/50 des Wassergehaltes in Dampfform, den sie bei Umgebungsdruck maximal aufnehmen kann. Bei einer so hohen Verdichtung kondensiert also praktisch der ganze, mit der Luft aus der Umgebung angesaugte Wasserdampf in den Zwischenkühlern und im Nachkühler. Um Störungen in den Maschinen und Apparaten zu vermeiden, muss dieses Kondensat in Wasserabscheidern aus dem Verdichterkreis entfernt werden. Bei einer Verdichtergruppe, die z.B. 300 kg/s Luft von 20°C und 80 % relativer Feuchtigkeit ansaugt, fallen dabei stündlich 12,5 m³ Wasser an, die bis dato durch ein Entwässerungssystem ungenutzt abgeleitet werden. Dieses Kondensat hat ungefähr die Qualität von Regenwasser.

Wegen der strengen Umweltschutzbedingungen ist die Verringerung des NO$_x$-Gehaltes der Abgase ein ernsthaftes Problem. Durch Einspritzung von Wasser oder Dampf in die Brennkammern kann bei normalen und bei Luftspeichergasturbinen der NO$_x$-Gehalt auf das zulässige Mass reduziert werden. Oft steht aber Wasser in der erforderlichen Qualität nicht zur Verfügung. Dessen Beschaffung bzw. Aufbereitung ist in solchen Fällen ein nicht zu vernachlässigender Kostenfaktor.

Aus der FR-A-2 230 B64 ist ein Luftspeichergasturbinenkraftwerk der eingangs genannten Art bekannt, bei dem zur Leistungssteigerung Wasser in die Brennkammer eingeführt wird. Es handelt sich dabei aber um Fremdwasser, dessen Aufbereitung Kosten verursacht und das vor seiner Einführung in die Brennkammer zur Kühlung der Verdichterluft ausgenützt wird. Dabei erwärmt es sich und verbessert damit zwar einerseits die Wärmebilanz, verliert aber andererseits an Kühlwirkung in der Brennkammer, so dass durch Erhöhung des Treibgasmassenstroms die Leistung verbessert, die NO$_x$-Bildung aber nicht verringert wird. Da letzteres bezweckt wird, liefert die FR-A-2 230 864 zur Lösung der vorliegenden Erfindungsaufgabe keinen Beitrag.

Die vorliegende, im einzigen Anspruch definierte Erfindung entstand aus der Aufgabe, das aus den Verdichterluftkühlern gewonnene Kondensat in vorteilhafter Weise anstelle von Fremdwasser entsprechender Qualität zur Einspritzung in die Brennkammer der Turbine zwecks Reduktion der NO$_x$-Bildung und zur Leistungssteigerung zu verwenden.

Aus der WO-A-81/02443 ist zwar eine Luftspeicherkraftwerksanlage in zwei Varianten bekannt, bei der ebenfalls das Kondensat in den Turbinenkreislauf eingeführt wird. Sie weisen je zwei Turbinen auf und werden je nach Betriebsart, d.h., Laden einer Luftspeicherkaverne, Stromerzeugung bei Normallast und bei Spitzenlast, mit verschiedenen Medien oder Mediengemischen betrieben. Bei dieser Anlage wird zwar Verdichterluftkondensat verwendet, das aber aus den nachstehenden Gründen nicht zur NO$_x$-Reduktion geeignet ist.

Die zwei Varianten der Anlage weisen je einen Niederdruck- und einen Hochdruckverdichter auf, wobei die Niederdruckluft bzw. die Hochdruckluft je einen Verdichterluftkühler durchströmen und das dabei anfallende Wasserkondensat in den Arbeitskreislauf der Anlage eingeführt wird. Bei den Medien, die in den besagten Luftkühlern einen Teil der Kompressionswärme der verdichteten Luft aufnehmen, handelt es sich um Luft und Wasser, die bei der ersten Ausführungsform für eine Dampfkesselanlage zur Speisung der zwei als Dampfturbinen arbeitenden Turbinen benutzt werden, und bei der zweiten Ausführungsform, deren zwei Turbinen Gasturbinen sind, in einem Gasgenerator zur Erzeugung von Wasser- oder Synthesegas aus einem vorzugsweise festen fossilen Brennstoff verwendet wird. Im Gegensatz zum Verfahren der vorliegenden Erfindung wird das Verdichterkondensat hier nicht gespeichert.

Bei der ersten Variante wird das in den Luftkühlern gewonnene Kondensat dem Kesselspeisewasser zugemischt, um den Gesamtwirkungsgrad des Dampfprozesses zu verbessern. Diese Variante hat also keinerlei Bezug zur Aufgabe der vorliegenden Erfindung.

Dies gilt aber ebenso für die zweite Variante, bei der das Wassergas durch Einwirkung eines Wasserdampf/Luft-Gemisches auf den glühenden fossilen Brennstoff erzeugt wird. Das Kondensat aus den Luftkühlern wird dabei dem zur Erzeugung des Wassergases bestimmten Wasser zugemischt und ist demnach an der Bildung des Wassergases beteiligt. Im Gasgenerator wird das Wasser in seine molekularen Bestandteile Wasserstoff und Sauerstoff aufgespalten, das Wassergas enthält also kein Wasser mehr. Dieses wird erst wieder durch die Verbrennung des Wassergases im Flammrohr der Brennkammer gebildet. Es liegt dort zwar in Dampfform vor, doch entsteht bei der Bildung von Wasser aus Wasserstoff und Sauerstoff Verbrennungswärme, d.h., eine Aufheizung der übrigen Bestandteile des in der Brennkammer gebildeten Treibgases und damit eine Begünstigung der $NO_x$-Bildung. Dies im Gegensatz zur vorliegenden Erfindung, gemäss welcher dem Treibgas durch Einspritzung des aus den Luftkühlern gewonnenen Kondensats Verdampfungswärme entzogen und das Treibgas dadurch gekühlt wird, um die $NO_x$-Bildung zu verringern.

Bei den mit einem Brenngas betriebenen Turbinen ist es wegen des gegenüber flüssigen Brennstoffen weit geringeren Heizwerts und damit tieferen Treibgastemperaturen auch kaum nötig, Wasser in die Brennkammer einzuspritzen. Somit hat auch diese zweite Ausführungsform keinen Bezug zur vorliegenden Erfindungsaufgabe.

Eine weitere Einrichtung, bei der ebenfalls Kondensat in die verdichtete Verbrennungsluft vor der Brennkammer einer Gasturbine eingeführt wird, ist auch aus der US-A-3,877,218 bekannt. Dabei wird das Kondensat aber noch vor dem Verdichter durch eine Kältemaschine in einem Kältemittelverdampfer gewonnen, der die Ansaugluft sehr weit unter den Taupunkt abkühlt, um das spezifische Volumen der Luft und damit die erforderliche Verdichterleistung zu reduzieren. Auch hier ist eine Speicherung des Kondensats nicht vorgesehen. Um eine Beschädigung des Verdichters durch das Kondensat zu vermeiden, wird dieses aus dem Kältemittelverdampfer abgezogen und nach dem Verdichter wieder in die verdichtete Luft eingeführt. Mit einem erheblichen apparativen Aufwand, der mit dem Kältekreislauf verbunden ist, erreicht man damit bei sonst gleichen Bedingungen für eine gegebene Gasturbinenanlage eine beträchtliche Mehrleistung, was aber mit einer wesentlich höheren Brennkammerbelastung und Beanspruchung der treibgasbeaufschlagten Bauteile der Turbine erkauft wird. Zwar wirkt das vor der Brennkammer in die verdichtete Verbrennungsluft eingeführte Kondensat der Ansaugluft kühlend, doch wird dadurch die höhere Wärmebelastung infolge des wegen des grösseren Luftdurchsatzes möglichen erhöhten Brennstoffdurchsatzes auch nicht annähernd kompensiert. Dazu kommt, dass, wie üblich, die verdichtete Verbrennungsluft zwecks Verbesserung des thermodynamischen Wirkungsgrades in einem Rekuperator durch die Turbinenabgase vorgewärmt wird.

Wegen der bei dieser Anlage herrschenden hohen Wärmebelastung bestehen somit beste Voraussetzungen für die $NO_x$-Bildung, deren weitgehende Verringerung Aufgabe der vorliegenden Erfindung ist.

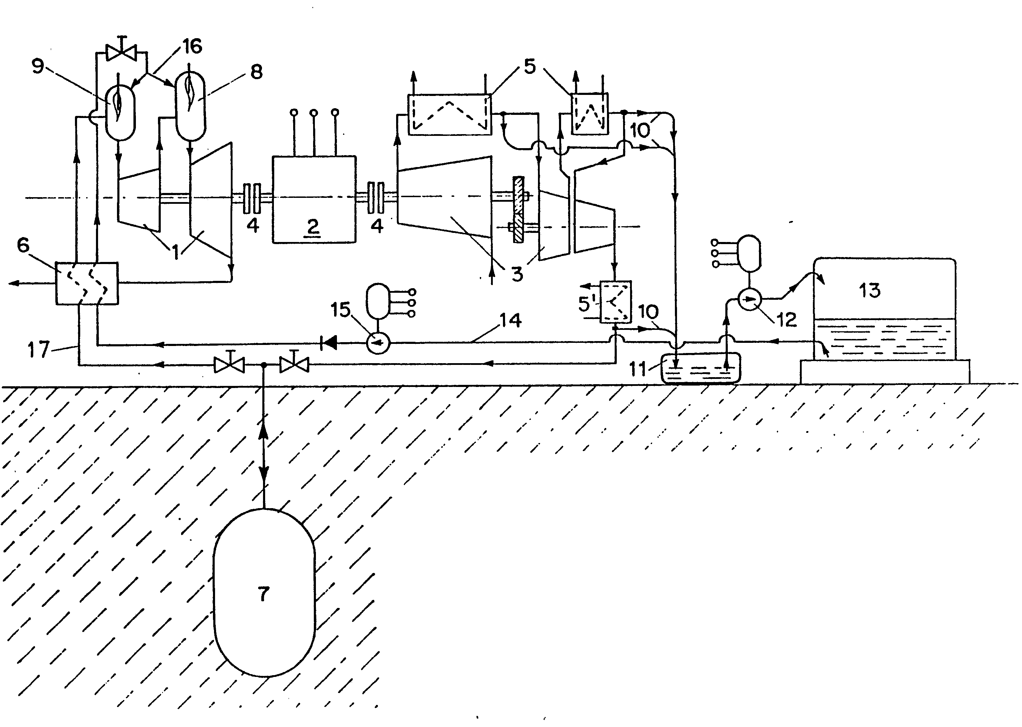

Die Erfindung wird im folgenden unter Bezugnahme auf das in der Zeichnung dargestellte Ausführungsbeispiel eines nach dem erfindungsgemässen Verfahren zu betreibenden Luftspeichergasturbinenkraftwerks näher beschrieben.

Nach dem erfindungsgemässen Verfahren kann für das einzuspritzende Wasser das in den Zwischenkühlern und im Nachkühler abgeschiedene Kondensat aus der verdichteten Verbrennungsluft verwendet werden, wodurch der im Wasser steckende Anteil der Kompressionswärme für den Arbeitsprozess erhalten bleibt. Bei Verwendung von Fremdwasser müsste diese Wärme einem Wärmetauscher der Anlage entnommen werden, was einen Verlust bedeutet.

Bei dem in der Zeichnung dargestellten Ausführungsbeispiel eines nach dem erfindungsgemässen Verfahren arbeitenden Luftspeichergasturbinenkraftwerks können die Gasturbine 1, der Generator 2 und die Verdichtergruppe 3 durch Schaltkupplungen 4 je nach Betriebsphase miteinander gekuppelt oder voneinander getrennt werden. Zu Spitzenlastzeiten ist die Verdichtergruppe 3 abgekuppelt und die mit dem Generator 2 gekuppelte Gasturbine 1 bezieht die Verbrennungsluft ausschliesslich aus einer unterirdisch angelegten Luftspeicherkaverne 7, die in Schwachlastzeiten von der Verdichtergruppe 3 geladen wird, die dann von dem als Motor geschalteten Generator 2, eventuell auch von der Gasturbine 1 unterstützt, angetrieben wird.

Zwischen der Niederdruckstufe und der Mitteldruckstufe bzw. zwischen dieser und der Hochdruckstufe ist je ein Zwischenkühler 5 und nach der Hochdruckstufe ein Nachkühler 5' vorgesehen. Aus diesen Kühlern wird das Kondensat über Kondensatleitungen 10 in einen Kondensatzwischenbehälter 11 abgeführt, von wo es durch eine Elektropumpe 12 in einen Kondensathauptbehälter 13 gefördert wird. Während des Turbinenbetriebes wird es aus dem Hauptbehälter 13 über eine Kondensatzuleitung 14 von einer Elektropumpe 15 über einen Rekuperator 6 in Einspritzvorrichtungen 16 einer Niederdruck- und einer Hochdruckbrennkammer 8 bzw. 9 der Gasturbine gefördert. Im Rekuperator 6, der von Haus aus zur Vorwärmung der durch eine Verdichterluftleitung 17 aus der Kaverne 7 oder von der Verdichtergruppe 3 gelieferten Luft durch die Turbinenabgase vorgesehen ist, wird das Einspritzwasser in einer Rohrschlange verdampft, was zusätzlichen Brennstoff erspart, der sonst für die Verdampfung des Einspritzwassers aufgewendet werden müsste. Der in die Brennkammern eingeführte Dampf bewirkt neben der Reduktion des $NO_x$-Gehaltes auf das gewünschte Mass eine gewisse Leistungssteigerung der Turbine, so dass das Verfahren auch die Wirtschaftlichkeit des Kraftwerks erhöht.

In der Regel wird man das Kondensat ohne weitere Aufbereitung zur Einspritzung verwenden können, bei besonders starken Luftverunreinigungen wird der allenfalls erforderliche Aufwand für die Behandlung sehr gering sein.

Der in den Wasserabscheidern der Kühler 5 und 5' anfallende Wassermassenstrom hängt von der Umgebungstemperatur und der relativen Luftfeuchtigkeit ab. Er variiert stark mit der Jahreszeit. Insbesondere kann es vorkommen, dass im Winter die täglich anfallende Wassermenge den Bedarf der Turbine nicht zu decken vermag, wogegen im Sommer der Kondensatanfall den Bedarf übersteigen wird. Der Hauptbehälter 13 ist daher so gross zu machen, dass er über längere Zeit einen Ausgleich des schwankenden Kondensatanfalls gewährleistet.

**Patentanspruch**

Verfahren zur NO$_x$-Reduktion und zur Leistungssteigerung eines Luftspeichergasturbinenkraftwerks (1-17), wobei Wasser aus einem Behälter in die Brennkammer der Gasturbine eingeführt wird, dadurch gekennzeichnet, dass als Wasser das in den Verdichterluftkühlern (5, 5') der Verdichtergruppe (3) anfallende Kondensat verwendet wird, wobei das Kondensat nach dem Ableiten aus den Verdichterluftkühlern (5, 5') zunächst in einem Kondensatzwischenbehälter (11) gesammelt und anschliessend aus diesem in einen Kondensathauptbehälter (13) gefördert wird, und dass das Kondensat aus dem Kondensathauptbehälter (13) den Brennkammern (8, 9) zugeführt wird.

**Claim**

Method for NO$_x$ reduction and power increase in an air storage gas turbine power station (1-17), water being introduced from a container into the combustion chamber of the gas turbine, characterised in that condensate arising in the compressor air coolers (5, 5') of the compressor group (3) is used as the water, the condensate being initially collected in a condensate intermediate receiver (11), after it has been drained from the compressor air coolers (5, 5'), and being subsequently pumped from this intermediate receiver into a main condensate tank (13), and that the condensate is fed from the main condensate tank (13) to the combustion chambers (8, 9).

**Revendication**

Procédé pour la réduction de NO$_x$ et pour l'augmentation de la puissance d'une centrale électrique à turbine à gaz à air comprimé (1 à 17), selon lequel de l'eau provenant d'un réservoir est introduite dans la chambre de combustion de la turbine à gaz, caractérisé en ce qu'à titre d'eau, on utilise le condensat produit dans les refroidisseurs d'air (5, 5,) du groupe de compresseurs (3), ce condensat après avoir été soutiré des refroidisseurs d'air (5, 5') étant rassemblé tout d'abord dans un réservoir de condensat intermédiaire (11), puis transféré de ce dernier dans un réservoir de condensat principal (13) et le condensat provenant du réservoir de condensat principal (13) est introduit dans les chambres de combustion (8, 9).